**Europäisches Patentamt**

**European Patent Office**

**Office européen des brevets**

(19)

(11) Publication number: **0 062 860**

**A1**

(12) **EUROPEAN PATENT APPLICATION**

(21) Application number: **82102833.9**

(22) Date of filing: **02.04.82**

(51) Int. Cl.³: **F 27 D 1/00**
**F 27 D 1/14**

(30) Priority: **14.04.81 US 254116**

(43) Date of publication of application:
**20.10.82 Bulletin 82/42**

(84) Designated Contracting States:
**BE DE FR GB IT NL SE**

(71) Applicant: **SAUDER ENERGY SYSTEMS, INC.**
**220 Weaver Street**
**Emporia Kansas 66801(US)**

(72) Inventor: **Sauder, Robert A.**
**2000 Morningside Drive**
**Emporia Kansas 66801(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 43**
**D-8000 München 22(DE)**

(54) **High temperature insulation.**

(57) A method of forming a refractory insulation module (10) for providing insulation for the walls of a high temperature furnace, which comprises mounting a batt (14) of a ceramic fiber insulation material onto a support sheet (12) by introducing a plurality of pairs of holding tabs (16.1 and 16.2) which extend from the support sheet (12), into the batt (14), and displacing the tabs (16.1 and 16.2) of each pair towards each other to clamp the material of the batt (14) between them and thereby secure the batt (14) to the support sheet (12).

Fig. 3

EP 0 062 860 A1

# HIGH TEMPERATURE INSULATION

This invention relates to high temperature insulation. More particularly, this invention relates to a method of forming a refractory insulation member, a method of forming a high temperature insulation module, a method of securing a backing sheet or panel to a ceramic fiber insulation material mat, a refractory insulation member, and a backing sheet.

The problems involved in insulating the interior surfaces of the walls (comprising the walls, ceiling and other furnace surfaces to be insulated) of a furnace are well-known. Historically, the interiors of high temperature furnaces have been lined with various types of bricks capable of withstanding high temperatures. When the brick lining wears out, however, it is an odious and time consuming task to replace the old brick with a new brick lining. Efforts have also been made to insulate the interior of a furnace where the interior or hot face of the insulation includes or consists of ceramic fiber material.

Ceramic fiber material, as referred to herein, is generally available in the form of a ceramic fiber blanket which is customarily manufactured in processes similar to the conventional paper making processes. As such, the fibers which constitute the blanket are oriented in planes which are generally parallel to the longitudinal direction of formation of the blanket or sheet.

If sections of such a blanket or sheet are cut to form mats or batts, and are applied as such to an interior surface of a furnace, the mat or batt would be in the form of a blanket in which the ceramic fibers will be lying in planes generally parallel to the surface to which the mat or batt is attached.

In such blanket form application to a furnace surface, the majority of the fibers of the ceramic material will tend to be lying in a direction which would tend to be colinear with the direction of formation of the blanket itself, although a considerable number of fibers will still be in a more or less random disposed orientation. Where the fibers are disposed in planes which are parallel to the furnace wall, there is generally a tendency for the fiber blanket material to produce cracks which result from heat shrinkage.

In addition, when using ceramic fiber insulation in blanket form, high temperature environments lead to problems relating to cracking, delamination and devitrification.

Attempts have been made to overcome the problems presented by the use of ceramic fiber in blanket form by severing strips of fiber from such a formed sheet in a

-3-

direction transversely to the direction of formation of the sheet.

These strips are cut from the fiber sheet in widths that represent the linear distance required from the cold face to the hot face of the insulating fiber mat. The cut strips are then placed on edge and laid lengthwise in side-by-side relationship with a sufficient number of strips being employed to provide a mat of a desired width.

Naturally, the thickness of the fiber sheet from which these strips are cut will determine the number of strips required to construct a mat.

By applying such strips to a furnace interior surface where the fibers of the ceramic fiber material generally extend transversely to the interior surface of the furnace wall, the problems presented by cracking, delamination and devitrification are substantially reduced.

In addition, since ceramic fiber material tends to be resiliently compressible, the strips can be arranged in abutting relationship thereby avoiding gaps forming between adjacent strips as a result of shrinkage during use.

Whether insulation material is used in blanket or strip form, some suitable means is required to preserve the integrity of the insulation material during handling, and particularly to allow the insulation material to be affixed to an interior surface of a furnace wall. Various methods have been attempted to achieve this objective. Thus, for example, where insulation material is used in blanket form, pins or studs can be prewelded to a furnace wall and the insulation material can then be impaled onto the pins or studs and secured in position by means of nuts or the like.

This procedure is disadvantageous since the pins or studs must be premounted on the furnace walls in a specific layout. This presents the disadvantage that the positioning of the pins or studs cannot readily be altered when required. In addition, because the pins or studs will extend through the insulation material, they will be exposed to the temperature within the furnace and will conduct heat from the furnace directly to the furnace walls. This is not only wasteful but leads to the formation of undesirable hot spots in the furnace walls.

Where insulation material is used in strip form, the strips may be secured to a furnace wall by means of prewelded brackets which are welded to the furnace wall, with the strips being secured to the brackets by means of wires or the like which extend through the fiber strips. This again provides the disadvantage that the brackets must be prewelded in a particular layout making repositioning impossible or impractical.

To overcome these disadvantages attempts have been made to secure insulation material to a furnace wall by mounting the insulation material on rigid ceramic material blocks or on supporting sheets or panels to form modules. The modules can then be separately handled and can be mounted on a furnace wall by mounting the rigid blocks, the sheets, or the panels to the furnace wall.

While this modular approach provides a number of advantages, it still presents the problem of effectively mounting the insulation material onto the rigid blocks, the sheets or the panels, as the case may be. Where the backing sheet is in the form of a rigid block, the fibers can be attached to the backing sheet by threading wires or rods through the insulating material and then attaching the wires or rods to the backing sheet by means of tying wires or the like at spaced intervals. This solution is, however, cumbersome and expensive. In addition, it is not particularly effective where the backing sheets are in the form of resiliently flexible sheet material.

One of the more promising solutions which has been suggested, has been to mount the insulation material onto a backing sheet by utilizing a temperature resistant adhesive. This solution has been relatively successful for many applications. However, in furnaces which operate in a sulfur environment corrosive liquids (which usually include sulfuric and/or sulfurous acids)form on the inner walls of the furnace. These corrosive liquids form here because it is cool enough at the walls for them to exist. Ironically, they therefore form at the zone where the modules are most vulnerable since available adhesives and ceramic cements are not capable of withstanding the action of such corrosive liquids over an extended period. The adhesive or cement therefore tends to fail after a period of use, resulting in premature failure of the modules and in separation of the insulation material from the backing sheets and thus from the furnace walls.

It is accordingly an object of this invention to provide a useful and practical method of attaching insulation material to a backing or supporting sheet which will overcome or reduce the disadvantages of the prior known methods.

While the principles of this invention may be employed in attaching insulation material to backing sheets for general insulation as well as for furnace insulation, this invention has particular application for the internal insulation of furnace walls of high temperature furnaces. For the purposes of the present invention "high temperature" will mean temperatures in excess of about 1,600°F and preferably in the range of about 1,600°F to about 2,800°F or more.

Furthermore, in the specification, reference to furnace walls shall mean all furnace surfaces which require insulation including ceilings and the like.

Ceramic fiber insulation materials are commercially available from several manufacturers and are well-known to those of ordinary skill in this art. Thus, for example, ceramic fiber blankets are manufactured under the trademarks or trade names "Kaowool" (Babcock and Wilcox), "Fiber-Frax" (Carborundum Co.), "Lo-Con" (Carborundum Co.), "Cero-Felt" (Johns-Manville Corp.) and "SAFFIL" (I.C.I.). While most of these ceramic fiber blankets have an indicated maximum operating temperature of about 2,300°F, the end or edge fiber exposure provided by reorientation of fiber strips can provide for effective operation up to about 2,800°F when the appropriate grade of fiber is used. An appropriate grade would, for example, be SAFFIL alumina fibers.

Another advantage which results from the use of fiber blanket in strips in end or edge exposure of the fibers, is that the resulting mat or batt has a certain resiliency in a direction parallel to the insulated face. Thus where metallic fasteners are employed to attach such a module to the interior wall of a furnace or oven, the fasteners can be buried or embedded in the insulation material. The natural resiliency of the material will tend to keep the ends of the fastening elements completely covered thereby providing insulation between the fasteners and the interior of the furnace and thereby reducing the extent to which heat is conducted by the fasteners from the interior of the furnace to the furnace walls.

In accordance with one aspect of the invention, a method of forming a refractory insulation member for providing insulation for a furnace, comprises mounting a batt of refractory insulating material onto a support sheet by introducing a plurality of pairs of holding tabs which extend from the support sheet, into the batt, and causing the tabs of each pair to be displaced towards each other to clamp the material of the batt between them and thereby secure the batt to the support sheet.

The tabs may, if desired, be introduced into the material of the batt while the tabs extend at an acute angle to the plane of the support sheet. This will, however, result in some displacement of insulation material away from the support sheet. Preferably, therefore, the tabs will be introduced into the material of the batts while the tabs extend substantially normally to the plane of the support sheet.

The tabs of each pair may be caused to be displaced towards each other by being bent or deformed towards each other, or by being allowed to resiliently return from a position where they are held apart during introduction into the batt.

While the tabs of each pair may be displaced towards each other during introduction of the tabs into the insulation material, the tabs are preferably displaced or crimped toward each other after the tabs have completely penetrated the insulation material and the support panel is abutting the adjacent surface of the batt.

In one preferred embodiment of the invention, the holding tabs are introduced into the batt by vibrating the support sheet relatively to the batt while the support sheet and batt are displaced towards each other for the tabs to enter the batt.

By so vibrating the support sheets relatively to the batt in a direction in line with the larger lateral dimensions of the tabs, the tabs will tend to form kerfs in the insulation material of the batt or tend to displace the fibers of the batt to allow the tabs to enter into the batt without unduly displacing the insulation material away from the support panel.

Any conventional means may be employed for holding the insulation material batt and the support sheet and then vibrating them relatively to each other during introduction of the tabs into the batt.

The support sheet may conveniently be held by a tool having displacement pins which extend through the sheet in zones adjacent to the tabs, with the displacement pins being displaceable relatively to the support sheet to displace, crimp or deform the tabs of each pair towards each other for gripping the insulation material of the batt.

The tabs preferably extend integrally from the support sheet, and are formed by punching tab formations out of the support sheet and then displacing the tab formations relatively to the support sheet to extend therefrom.

The tabs may preferably be formed so that the adjacent free edges of the tabs of each pair which grip insulation material between them are rounded to combat or reduce the tendency for such free edges to sever fibers of the refractory insulation material during use.

The tab formations may be punched out of the support sheet by utilizing conventional techniques. Thus, for example, such a support sheet may be formed by locating a support sheet in a die having suitably arranged recesses or apertures, and then applying a punching tool to the sheet to punch out the tab formations and then displace them to extend transversely to the plane of the support sheet.

This operation may be carried out in a batch process, in a progressive die process or in a continuous operation.

The support sheet may conveniently have the pairs of holding tabs arranged in laterally spaced rows which extend across the support sheet, with the pairs of tabs in adjacent rows being arranged in staggered relationship.

The length and shape of the tabs will be governed largely by the type of insulation material to be employed and by the furnace or oven temperatures for which the refractory insulation member is designed.

There will therefore be a sufficient number of tabs and the width and length of the tabs will be such as to provide a sufficient and effective mounting of the insulation material on the support sheet.

Limitations will be placed on the numbers of pairs of holding tabs by the requirement that the support sheet must retain sufficient strength to effectively support the refractory insulation member and to support the insulation material against a surface of a furnace wall when the support sheet is secured to such a furnace wall.

A limitation will be placed on the length of the tabs since sufficient insulation material must remain between the free ends of the tabs and the hot face of the member for the insulation member to shield such free ends from the interior of the furnace and thereby prevent wasteful heat loss through conduction through the tabs, and also prevent undue heat oxidation of the free ends of the tabs.

The tabs may conveniently be of rectangular shape. They may, however, be of triangular, delta or like shape.

The tabs of each pair of holding tabs may be displaced or bent towards each other to compress the insulation material between them. Alternatively, however, the tabs of each pair may be crimped together or deformed together to provide mating rib and groove formations, mating teeth formations or the like.

In an embodiment of the invention the tabs may be arranged so that they are not necessarily in the form of opposed pairs of aligned tabs, but in the form of pairs or sets of laterally spaced tabs which can be bent, deformed, or displaced towards clamping positions where clamping is effected by the staggered relationship of the tabs or fingers in the insulation material.

The refractory insulation member may be of any desired shape and configuration for the intended application of the invention. It may, however, conveniently be in the form of a module of a standard configuration to be mounted in side-by-side relationship with corresponding modules for insulating a furnace wall.

The method may include the step of providing at least one attachment zone in the support sheet for use in attaching the support sheet to a furnace surface.

In one embodiment of the invention, a plurality of spaced attachment zones may be provided in the support sheet so that selected attachment zones may be used for attaching the module to a wall surface.

The attachment zones may conveniently be in the form of apertures in the support sheet for receiving attachment pins, studs, bolts or the like to pass through the aperture and be welded or otherwise secured to a furnace wall.

The attachment means may conveniently include washer means to surround the aperture and extend over an adjacent area of the support sheet to thereby provide firm support for such a support sheet, and thus for the module, against a furnace wall by distributing the pressure of a bolt or stud head or the like, over the area of the washer means.

While the batt of refractory insulating material for the method of this invention may be any suitable refractory insulating material, it may conveniently be in the form of a ceramic fiber insulating material for use in high temperature furnaces.

The invention further extends to a method of securing a backing panel to a ceramic fiber insulation material mat to form a module for attachment to an interior surface of a furnace wall, which comprises introducing a plurality of gripping fingers which extend from the backing panel, into the material of the mat and then deforming the gripping fingers to resiliently grip the fibrous insulation material.

The method may preferably comprise introducing a plurality of pairs of opposed gripping fingers into the material of the mat, and then deforming or otherwise displacing the gripping fingers of each pair towards each other to grip the fibrous insulation material between them.

The invention further extends to a refractory insulation member for use in insulating a furnace, the member comprising a support sheet having a plurality of pairs of gripping fingers extending therefrom, and a mat of refractory insulation material which is mounted on the support sheet by means of the gripping fingers of each pair which extend into the mat and which compress the material of the mat between them to mechanically secure the mat to the support sheet.

The member is preferably in the form of a module for attachment in side-by-side relationship with corresponding modules to an interior wall surface of a furnace to insulate the walls of such a furnace.

The mat is preferably a mat of ceramic fiber material with the module being in the form of a high temperature insulation module for insulating a high temperature furnace.

The ceramic fiber material may comprise fibers randomly orientated in planes with the fibers generally extending parallel to the plane of the support sheet. Preferably, however, for high temperature applications, the ceramic fiber material comprises fibers randomly oriented in planes with the planes of the fibers generally extending transversely to the plane of the support sheet.

The module preferably has the pairs of gripping fingers arranged in laterally spaced rows across the support sheet with the pairs of gripping fingers in adjacent rows being arranged in staggered relationship.

Each gripping finger may conveniently have a length which is sufficient to provide an effective gripping action but which is short enough so that the portion of the mat between the free ends of the gripping fingers and the hot face of the module (which will be directed towards the interior of the furnace during use) will insulate and shield the gripping fingers from the furnace heat and combat heat oxidation of the free ends of the gripping fingers.

For high temperature applications, the lengths of the gripping fingers may for example be between about 1/4th and about 1 inch and conveniently between about 1/4th inch and about 3/4th inch.

The support sheet may be made of any convenient material which will withstand the temperatures which the sheet will experience and which will be sufficiently resistant to corrosion to provide an extended effective life for the module.

The support sheet may, in one embodiment of the invention, be formed out of sheet steel such as, for example, hot rolled low carbon pickled and oiled sheet steel.

The support sheet may, however, be formed out of other metal or metal alloys which will be resistant to corrosion and to the high temperature environments, and which will provide tabs which can be deformed or displaced to provide an effective gripping action.

The support sheet may conveniently be coated or otherwise protected with a protective coating or material to improve its resistance to corrosion. Thus, for example, the sheet may be coated with an epoxy, with a silicate based material, with an ashphalt material or the like to improve its resistance to sulfuric acid corrosion and heat oxidation.

The invention further extends to a support sheet for attachment to a surface of an insulation mat to form an insulation module, the support sheet having a plurality of pairs of gripping fingers extending therefrom, the fingers of each pair being positioned to be introduced into such a mat, and being adapted to be displaced inwardly towards each other for mechanically gripping the material of such a mat between them to thereby secure the support sheet to such a mat.

The gripping fingers may be in the form of opposed pairs of gripping fingers or in the form of laterally spaced gripping fingers. In either case, the fingers will be displaced or deformed into a gripping position where the fingers of each pair will grip fibers between them or where the laterally spaced fingers will cooperate to exercise a gripping action.

It will be appreciated that the thickness of the insulation material will be governed by the furnace environments for which it is designed.

The thickness and resistance to flexing of the support or backing sheet or panel will preferably be sufficient to insure that a module will remain substantially planar when attached to a furnace wall.

In a typical embodiment of the invention, where the support sheet or panel is of sheet steel, the panel may be of 14 to 18 gauge and preferably 16 gauge sheet steel.

It will be appreciated, however, that for certain applications of the invention a support sheet or panel of greater rigidity may be employed. Similarly, where the module is to be applied to planar vertically extending furnace surfaces the backing sheet or support sheet or panel may be made of less rigid material.

Thus, for example, in one embodiment of the invention, the support sheet may comprise an expanded metal mesh. In this embodiment of the invention, the gripping fingers may be formed by severing selected sides defining the mesh apertures and displacing these to define the gripping fingers. In this embodiment of the invention, the gripping fingers may be bent or otherwise deformed to increase their gripping action.

A preferred embodiment of the invention is now described by way of example with reference to the accompanying drawings.

In the drawings:-

Figure 1 shows a plan view of a high temperature insulation module in accordance with this invention with the ceramic fiber insulation material removed to clearly illustrate the support sheet of the module;

Figure 2 shows, to an enlarged scale, a fragmentary three-dimensional view of a portion of the support sheet of Figure 1; and

Figure 3 shows a fragmentary, sectional side elevation of the module of this invention along the line III-III of Figure 1.

With reference to the drawings, reference numeral 10 refers generally to a high temperature insulation module for attachment to the interior surfaces of the walls of a high temperature furnace for insulating the furnace.

The module 10 is adapted to be mounted to the walls of a furnace in side-by-side abutting relationship with corresponding modules to provide a continuous insulating surface over the interior surfaces of the furnace walls.

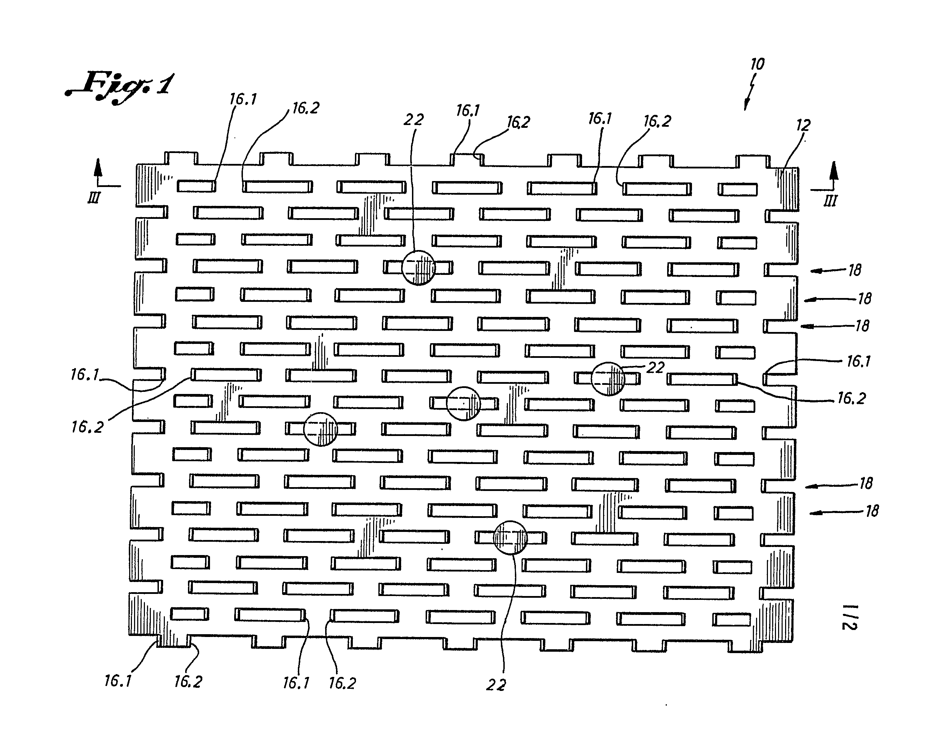

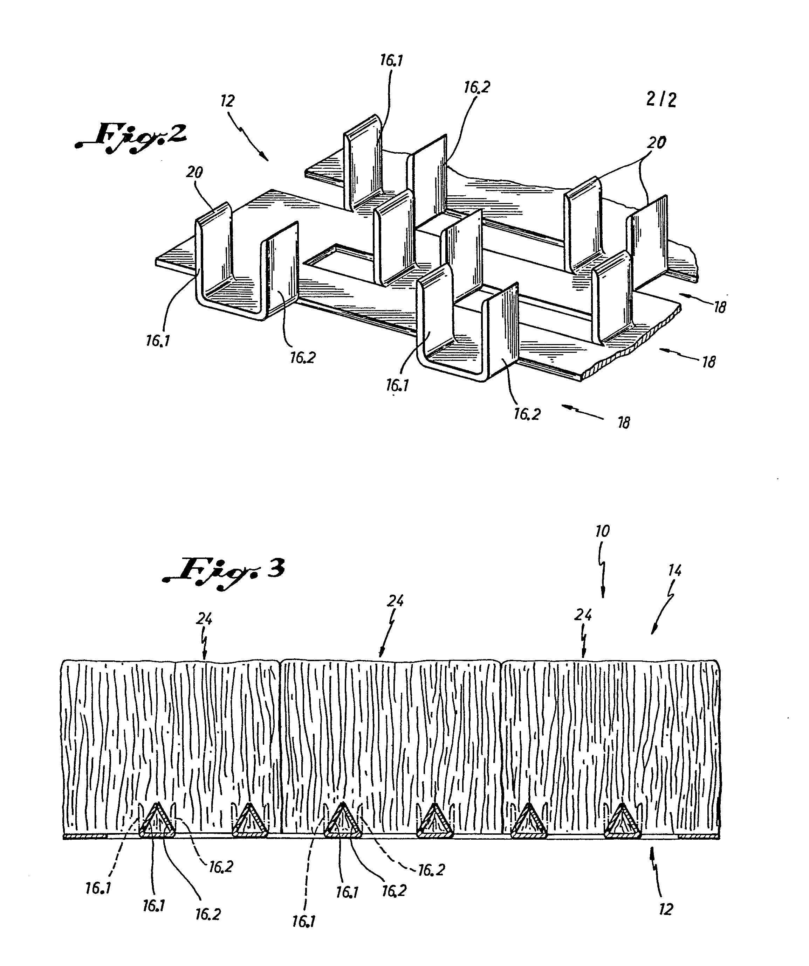

The module 10 comprises a support sheet 12 (as shown separately in Figures 1 and 2) and a batt 14 of ceramic fiber insulation material (as shown in Figure 3) which is mounted on the support sheet 12 to constitute the module 10.

The module 10 may be formed in various sizes depending upon the intended application of the module and the storage and handling requirements thereof.

The module may therefore be relatively narrow and have a length several times its width for specific furnace designs.

For versatility, ease of handling, and ease of mounting, the support sheet will preferably have a width of nine inches and a length of 11.92 inches as shown in the drawing. The module will then, as hereinafter described, have dimensions of 12" x 12" once the batt 14 has been mounted in position on the support sheet.

It will be appreciated, however, that the module can readily be cut when required to fit particular gaps in a furnace during insulation of such a furnace.

With the dimensions of the module as illustrated in the drawings, the support sheet 12 is preferably formed out of a sixteen gauge (0.0598 inches) hot rolled low carbon pickled and oiled sheet steel.

The support sheet 12 has a plurality of pairs of gripping fingers 16.1 and 16.2 which are integral therewith and extend normally to the plane of the support sheet.

The pairs of gripping fingers 16.1 and 16.2 are arranged in laterally spaced rows 18 which extend along the length of the support sheet 12. The pairs of gripping fingers 16.1 and 16.2 in adjacent rows 18 are arranged in staggered relationship.

The pairs of gripping fingers 16.1 and 16.2 are formed by placing the support sheet 12 on a die having appropriately positioned recesses to accommodate the gripping fingers when they extend transversely to the plane of the support sheet 12, and then applying a punching die to the support sheet 12 to punch out the gripping finger formations 16.1 and 16.2 and then displace them until they extend normally to the support sheet 12.

The punching of the gripping fingers 16.1 and 16.2 is carried out so that the inner adjacent free edges of the gripping fingers 16.1 and 16.2 of each pair are rounded as at 20 to minimize any damage or tendency to sever the fibers of the batt 14 during use.

With the shape of the module 10 illustrated in the drawings, each gripping finger 16 conveniently has a length of about one-half an inch. Adjacent pairs of gripping fingers 16.1 and 16.2 in each row 18 are therefore approximately 1.2 inches apart. The gripping fingers 16.1 and 16.2 of each pair are, in their operative position, approximately one-half inch apart.

The gripping fingers 16 are rectangular, having a width of approximately 3/16th of an inch, while the centerlines of the rows 18 are approximately 1/2 inch apart.

The support sheet 12 is provided with a plurality of spaced attachment zones 22 for use in attaching the support sheet 12 and thus the module 10 to a furnace wall.

The attachment zones 22 are in the form of apertures for receiving a bolt, stud or the like to secure the support sheet 12 and thus the module 10 to a furnace wall.

If desired, the support sheet 12 may be provided with washers to reinforce the attachment zones 22 and thereby distribute the pressure applied by a bolt head or the like over a larger surface of the support sheet 12 to thereby insure secure attachment of the support sheet 12 to a furnace wall.

The batt of ceramic fiber insulation material 14 is formed by cutting 3 inch wide strips transversely to the length of a blanket of ceramic fiber insulation material having a thickness of 4 inches and a width of 12 inches. It will be appreciated, however, that the widths of the strips will determine the thickness of the module 10 between its hot and cold faces. Thus, for example, strips may be cut having widths of 3 inches or widths of up to 12 inches, 14 inches or more.

Three such strips 24 each having a length of 12 inches, are then positioned together in side-by-side relationship to constitute the batt 14 having a thickness of 3 inches.

Because the support sheet has a width of 9 inches, the batt will project 1-1/2 inches beyond the edges of the support sheet which define the width, thereby resulting in a module 10 having a length of 12 inches and a width of 12 inches.

In practice the modules can be mounted on a furnace wall in a parquet-type arrangement so that the projecting batt portions can be resiliently compressed against adjacent modules to eliminate gaps during use.

Because of the manner of forming the strips 24, the planes of the fibers of the strips will generally extend transversely to the plane of the support sheet 12 thereby providing for effective mounting of the batt 14 on the support sheet 12. In addition, because of the transverse orientation of the fibers of the batt 14, the module 10 will provide maximum resistance to cracking, shrinkage, delamination and devitrification during use.

The module 10 is formed by locating the batt 14 in position upon a supporting surface and supporting the support sheet 12 on a vibrating and displacing tool.

The tool conveniently comprises a plurality of elongated flat bars which correspond to the rows 18. Each bar conveniently has a plurality of pairs of displacement pins at spaced intervals along its length.

The displacement pins are at spaced intervals to extend through the support sheet 12 through the apertures left therein by displacement of the gripping fingers 16 and are angled for displacing the gripping fingers 16 towards each other as is hereinafter described.

The displacement bars are mounted in a tool which can be vibrated in a direction parallel to the plane of the support sheet 12 during insertion of the gripping fingers 16 into the batt 14.

Such vibration will insure that the gripping fingers 16 tend to separate the fibers of the batt to form kerfs to allow their penetration into the batt without unduly displacing the ceramic fiber material of the batt away from the support sheet 12.

Once the gripping fingers 16 have penetrated fully into the batt 14, relative vibration of the batt 14 and support sheet 12 will be discontinued.

Thereafter the bars in the adjacent rows 18 may be displaced along the rows 18 in a first opposed direction to displace one gripping finger 16 of each pair of gripping fingers towards the opposed gripping fingers 16, and then in the reverse direction to displace the remaining gripping finger of each pair of gripping fingers towards the previously displaced gripping finger into the position shown in Figure 3.

During such displacement of the pairs of gripping fingers 16.1 and 16.2, the gripping fingers will resiliently compress the fibers of the mat between them until the free ends of the gripping fingers are substantially in contact with each other to firmly grip the ceramic fibers of the batt 14 in all the gripping zones.

The batt 14 is thereby securely attached to the support sheet 12 to constitute the module 10.

The embodiment of the invention as illustated in the drawings provides the advantage that a batt of insulating material can be secured to a support sheet 12 in a secure and effective manner to provide a mechanical connection. The mechanical connections avoid the disadvantages presented by the prior art use of ceramic cements and the like and can provide a gripping action which will remain effective throughout the normal projected life of a module 10.

This invention provides the further advantage that the most effective action appears to be provided by the fingers when the fingers are deformed or displaced so that only the free ends of the fingers of each pair are substantially in contact with each other. Thus the effective gripping action is provided essentially by the free ends of the fingers.

Because the free ends of the fingers are spaced about half an inch inwardly into the insulation material from the cold face of the module 10, the free ends of the fingers will be at a substantially higher temperature than the main portion of the plane of the support sheet 12 during use.

Thus, for example, where the module 10 is used in a furnace at a temperature of about 2,200°F, the module would typically be designed to provide a temperature at the cold face in the region of about 250°F. It follows, therefore, that the free ends of the fingers, spaced about half an inch from the cold face, would tend to be at a temperature of approximately 800°F. It follows therefore that the free ends of the fingers, which provide the mechanical gripping action, will be at a sufficiently high temperature during use to ensure that water vapor cannot exist there. This will ensure that sulfuric or sulfurous acid cannot form at the free ends of the fingers except, possible, during startup and shutdown operation.

This can, therefore, provide the further advantage that corrosion will be reduced or limited in the vicinity of the zones where the effective gripping action is provided.

This is, again, in contrast to module systems in which backing or support sheets are attached by means of adhesives. In such system the adhesive material will all lie in the plane of the cold face where the temperature is lower and where the tendency for corrosive sulfuric acid to form and corrode is much greater.

0062860

CLAIMS:

1. A method of forming a refractory insulation member for providing insulation for a furnace, characterized in that it comprises mounting a batt of refractory insulating material onto a support sheet by introducing a plurality of pairs of holding tabs which extend from the support sheet, into the batt, and causing the tabs of each pair to be displaced towards each other to clamp the material of the batt between them and thereby secure the batt to the support sheet.

2. A method according to claim 1, characterized in that the holding tabs are introduced into the batt by vibrating the support sheet relatively to the batt while the support sheet and batt are displaced towards each other for the tabs to enter the batt.

3. A method according to claim 2, characterized in that the holding tabs are introduced into the batt while the tabs extend substantially normally to the plane of the support sheet, and in that the support sheet and batt are vibrated relatively to each other in the plane of the support sheet for each holding tab to form a kerf in the material of the batt and thereby minimize displacement of the material of the batt away from the plane of the support sheet during introduction of the tabs into the batt.

4.   A method according to claim 2, characterized in that the batt is of a fibrous ceramic material, and in that the support sheet and the batt are vibrated relatively to each other for the holding tabs to enter between the fibers during displacement of the batt towards the support sheet and to thereby limit displacement of the material away from the support sheet during penetration of the tabs into the material of the batt.

5.   A method according to any one of claims 1 to 4, characterized in that the pairs of holding tabs are arranged in laterally spaced rows which extend across the support sheet, and in that the pairs of tabs in adjacent rows are arranged in staggered relationship.

6.   A method according to any one of claims 1 to 5, characterized in that the tabs of each pair are deformed towards each other to resiliently grip the insulating material of the batt between them.

7.   A method according to any one of claims 1 to 6, characterized in that the tabs extend integrally from the support sheet, and in that the tabs are formed so that the adjacent free edges of the tabs of each pair which grip material between them are rounded to combat severance of fibers during use of the refractory insulation member.

8.   A method according to any one of claims 1 to 7, characterized in that the refractory insulation member is formed to constitute a high temperature insulation module to be mounted in side-by-side relationship with corresponding modules for insulating a furnace wall.

9.   A method according to any one of claims 1 to 8, characterized in that it includes the step of providing at least one attachment zone in the support sheet for use in attaching the support sheet to a furnace surface.

10.   A refractory insulation member for use in insulating a furnace, characterized in that the member comprises a support sheet having a plurality of pairs of gripping fingers extending therefrom, and a mat of refractory insulation material which is mounted on the support sheet by means of the gripping fingers of each pair which extend into the mat and which compress the material of the mat between them to mechanically secure the mat to the support sheet.

11.   A member according to claim 10, characterized in that it is in the form of a high temperature insulation module for attachment in side-by-side relationship with corresponding modules to an interior wall surface of a furnace to insulate the walls of such a furnace.

12.   A member according to claim 10 or claim 11, characterized in that the mat is of a ceramic fiber material, and in that the ceramic fiber material comprises fibers randomly oriented in planes with the fiber planes generally extending transversely to the plane of the support sheet.

13. A member according to any one of claims 10 to 12, characterized in that the support sheet has the pairs of gripping fingers arranged in laterally spaced rows across the support sheet, with the pairs of gripping fingers in adjacent rows being in staggered relationship.

14. A member according to any one of claims 10 to 13, characterized in that the free edges of the gripping fingers of each pair which are directed towards each other are rounded to minimize cutting of the material of the mat gripped between them.

15. A support sheet for attachment to a surface of a ceramic fiber insulation mat to form a high temperature insulation module, characterized in that the support sheet has a plurality of pairs of gripping fingers extending therefrom, the fingers of each pair being positioned to be introduced into such a mat, being adapted to be displaced inwardly towards each other for mechanically gripping the material of such a mat between them to thereby secure the support sheet to such a mat, and the fingers of each pair having their free edges which are directed towards each other, rounded to minimize cutting by these edges of material gripped between them.

16. A support sheet according to claim 15, characterized in that it has at least one attachment zone for cooperating with attachment means for use in attaching the support sheet to a furnace surface.

**Fig. 1**

_Fig.2_

16.1

16.2

12

20

20

16.1

16.2

16.1

16.2

16.1

18

18

18

_Fig.3_

10

14

24

24

24

16.1

16.2

16.1

16.2

16.1

16.2

16.1

16.2

16.1

12

**0062860**

European Patent
Office

**EUROPEAN SEARCH REPORT**

Application number

EP 82 10 2833

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 591 152 (MILLS) <br><br> * claims; figures * <br><br> --- | 1,5,6, 7,10, 13,14, 15 | F 27 D 1/00 <br> F 27 D 1/14 |
| Y | US-A-3 990 203 (GREAVES) <br> * column 5, lines 1 to 30; figure 6 * <br><br> --- | 1 | |
| Y | US-A-1 506 931 (HICKS) <br> * claims; figures * <br><br> --- | 1,5,6 | |
| Y | US-A-3 089 284 (HEUER) <br> * column 2, figure 3 * <br><br> --- | 1 | |
| A | US-A-3 275 073 (PINCUS) <br><br> --- | | TECHNICAL FIELDS SEARCHED (Int. Cl. ³) |
| A | FR-A-2 406 779 (McKECHNIE REFRACTORY FIBRES LTD.) <br><br> --- | | F 27 D <br> E 04 F <br> F 23 M |
| A | US-A-1 579 546 (LEHPAMER) <br><br> ----- | | |

The present search report has been drawn up for all claims

| Place of search | Date of completion of the search | Examiner |
|---|---|---|
| THE HAGUE | 18-06-1982 | COULOMB J.C. |